(19)

Europäisches
Patentamt
European
Patent Office
Office européen
des brevets

(11) **EP 2 499 192 B1**

(12) **EUROPEAN PATENT SPECIFICATION**

(45) Date of publication and mention
of the grant of the patent:
**15.07.2020 Bulletin 2020/29**

(51) Int Cl.:
**C08J 9/35** *(2006.01)*          **B32B 7/04** *(2019.01)*
**C08J 7/06** *(2006.01)*          **C08J 9/34** *(2006.01)*

(21) Application number: **10829596.5**

(86) International application number:
**PCT/IB2010/003049**

(22) Date of filing: **12.11.2010**

(87) International publication number:
**WO 2011/058439 (19.05.2011 Gazette 2011/20)**

(54) **HYDROPHOBIC INTERACTION CHROMATOGRAPHY MEMBRANES**

MEMBRANEN FÜR HYDROPHOBE INTERAKTIONSCHROMATOGRAPHIE

MEMBRANES POUR CHROMATOGRAPHIE D'INTERACTION HYDROPHOBE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.11.2009 US 261009 P**

(43) Date of publication of application:
**19.09.2012 Bulletin 2012/38**

(73) Proprietor: **Merck Millipore Ltd.
Carrigtwohill (IE)**

(72) Inventors:
 • **KOMKOVA, Elena, N.**
   **Hamilton**
   **ON L8S 4P4 (CA)**
 • **MIKA, Alicja, M.**
   **Hamilton**
   **ON L8S 3E3 (CA)**
 • **PANKRATZ, Marianne**
   **Caledonia**
   **ON N3W 1G7 (CA)**

(74) Representative: **Barker Brettell LLP
100 Hagley Road
Edgbaston
Birmingham B16 8QQ (GB)**

(56) References cited:
   **WO-A2-2010/117598       US-A1- 2008 264 867
   US-A1- 2010 059 443       US-B2- 7 316 919**

 • **XIE S ET AL: "Rigid porous
   polyacrylamide-based monolithic columns
   containing butyl methacrylate as a separation
   medium for the rapid hydrophobic interaction
   chromatography of proteins", JOURNAL OF
   CHROMATOGRAPHY, ELSEVIER SCIENCE
   PUBLISHERS B.V, NL, vol. 775, no. 1-2, 18 July
   1997 (1997-07-18), pages 65-72, XP004116844,
   ISSN: 0021-9673, DOI:
   10.1016/S0021-9673(97)00254-9**

EP 2 499 192 B1

## Description

## BACKGROUND OF THE INVENTION

Hydrophobicity is generally defined as the repulsion between a non-polar compound and a polar environment, such as water. Hydrophobic "interactions" are essentially the physical manifestation of the tendency of a polar environment to exclude hydrophobic (i.e., non-polar) compounds, forcing aggregation of the hydrophobic compounds. The phenomenon of hydrophobic interactions may be applied to the separation of proteins by using an aqueous salt solution to force a hydrophobic protein to aggregate with or bind adsorptively to hydrophobic functional groups affixed to a solid support. The adsorbed proteins are released from the adsorbent by elution with decreasing salt concentrations, effectively unwinding the environment that promoted the hydrophobic interactions, and leading to loss of hydrophobic interactions between the proteins and the support. The proteins are released from the support in order of increasing hydrophobicity (i.e., the least hydrophobic proteins are released first). Hydrophobic interaction chromatography (HIC) may be distinguished from reverse phase chromatography in that salts are used during the HIC elution step.

In essence, hydrophobic interaction chromatography is a method for separating biomolecules based on the relative strengths of their hydrophobic interactions with a hydrophobic adsorbent. In general, HIC is a selective technique. HIC is sensitive enough to be influenced by non-polar groups typically buried within the tertiary structure of proteins but exposed if the polypeptide chain is incorrectly folded or damaged (e.g., by a protease). This sensitivity can be useful for separating a correctly folded or undamaged protein from other forms.

Hydrophobic interaction chromatography is also a very mild method of separation and purification. The structural damage to a purified biomolecules is minimal, due in part to the stabilizing influence of salts and also to the rather weak interaction with the matrix. Nevertheless, recoveries of purified material are often high. Thus, HIC combines the non-denaturing characteristics of salt precipitation with the precision of chromatography to yield excellent activity recoveries.

Therefore, HIC is a versatile liquid chromatography technique, and should be viewed as a potential component of any purification strategy, often in combination with ion-exchange chromatography and gel filtration. HIC has also found use as an analytical tool in detecting protein conformational changes. HIC requires a minimum of sample pre-treatment and can thus be used effectively in combination with traditional protein precipitation techniques. Protein binding to HIC adsorbents is promoted by moderately high concentrations of anti-chaotropic salts, which also have a stabilizing influence on protein structure.

Most commercially available HIC matrices are in the form of resins. While the resins show high binding capacities for various biological molecules, HIC processes using resins suffer from fouling and low flux capacities. In contrast, chromatography matrices in the form of membranes exhibit increased flux capacities in comparison to their resin counterparts. Therefore, a need exists for a high-binding capacity membrane-based HIC matrix to realize the separation efficiency of a resin combined with the process benefits of a membrane.

## BRIEF SUMMARY OF THE INVENTION

In certain embodiments, the invention relates to a composite material, comprising:

a support member, comprising a plurality of pores extending through the support member; and
a macroporous cross-linked gel, comprising a plurality of macropores, and a plurality of pendant hydrophobic moieties;
wherein the macroporous cross-linked gel is located in the pores of the support member; and the average pore diameter of the macropores is less than the average pore diameter of the pores, wherein the macroporous cross-linked gel comprises a polymer formed through the in situ reaction of a first monomer and a second monomer and a cross-linking agent; and the first monomer has a log P value (octanol-water) from 1 to 7; and the second monomer has a log P value (octanol-water) from -1 to 1; and in that the first monomer is ethyl acrylate, methyl methacrylate, phenyl acrylate, n-butyl acrylate, n-butyl methacrylate, n-hexyl acrylate, 2-ethylhexyl acrylate, n-octyl acrylate, n-decyl acrylate, lauryl acrylate or lauryl methacrylate; and the second monomer is acrylamide, N-vinyl-2-pyrrolidinone, 2-hydroxyethyl methacrylate, methyl acrylate or glycidyl methacrylate; and in that the cross-linking agent is trimethylolpropane trimethacrylate.

In certain embodiments, the invention relates to any one of the aforementioned composite materials, wherein the pendant hydrophobic moieties are ethyl, butyl, hexyl, 2-ethylhexyl, dodecyl, stearyl, hydroxypropyl, phenyl, ether, or poly(propylene glycol) groups.

In certain embodiments, the invention relates to any one of the aforementioned composite materials, wherein the composite material is a membrane.

In certain embodiments, the invention relates to a method of making the composite material of the invention, comprising the steps of:

combining the first monomer, the second monomer, a photoinitiator, the cross-linking agent, and a solvent, thereby forming a monomeric mixture;
contacting a support member with the monomeric mixture, thereby forming a modified support member; wherein the support member comprises a plurality of pores extending through the support member, and the average pore diameter of the pores is about 0.1 to about 25 $\mu$m;

covering the modified support member with a polymeric sheet, thereby forming a covered support member; and

irradiating the covered support member for a period of time, thereby forming a composite material.

## BRIEF DESCRIPTION OF THE FIGURES

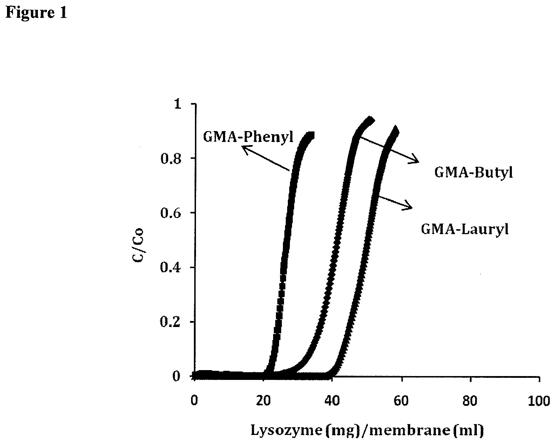

**Figure 1** depicts graphically the relationship between (i) the ratio ($C/C_0$) of the concentration of lysozyme in permeate (C) to the concentration of lysozyme in initial sample ($C_0$) and (ii) lysozyme binding capacity (mg/mL$_{membrane}$) for three HIC membranes with differing pendant hydrophobic moieties.

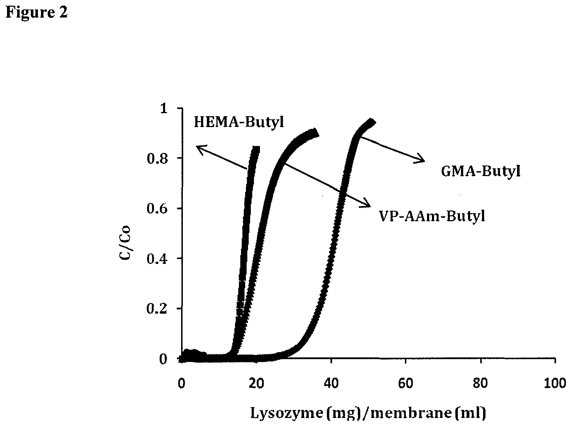

**Figure 2** depicts graphically the relationship between (i) the ratio ($C/C_0$) of the concentration of lysozyme in permeate (C) to the concentration of lysozyme in initial sample ($C_0$) and (ii) lysozyme binding capacity (mg/mL$_{membrane}$) for three HIC membranes with pendant butyl moieties and variable levels of gel-matrix hydrophobicity.

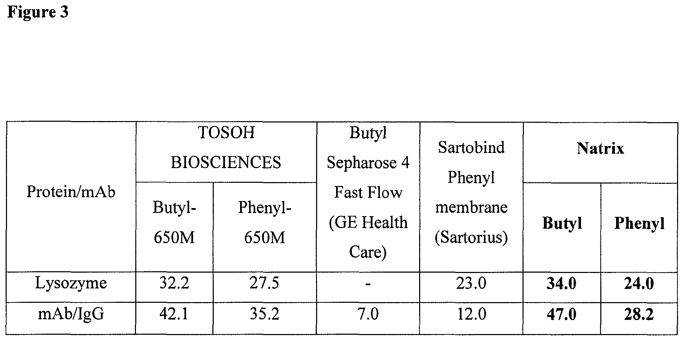

**Figure 3** tabulates the binding capacities (mg/mL$_{gel/membrane}$) (10% breakthrough) for lysozyme and a mAb of: two commercial HIC resins (TOSOH Bioscience); two commercial HIC membranes (Butyl Sepharose 4 Fast Flow, and Sartobind Phenyl); and two HIC membranes (Butyl and Phenyl) of the present invention.

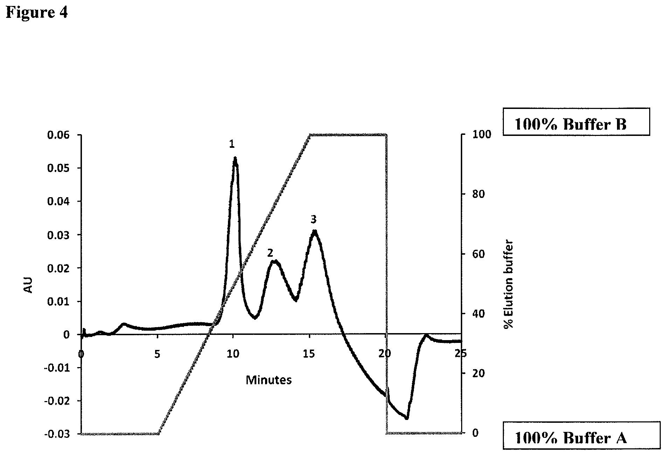

**Figure 4** depicts the separation of myoglobin (1), lysozyme (2) and $\alpha$-chymotrypsinogen A (3) by hydrophobic interaction chromatography. The proteins were eluted using a gradient buffer change from Buffer A to Buffer B as indicated (gray line, right y-axis) on poly(AAm-co-VP-co-BuMe) membrane prepared as described in Example 5. Peaks are assigned based on individual capture/elution data from Table 2.

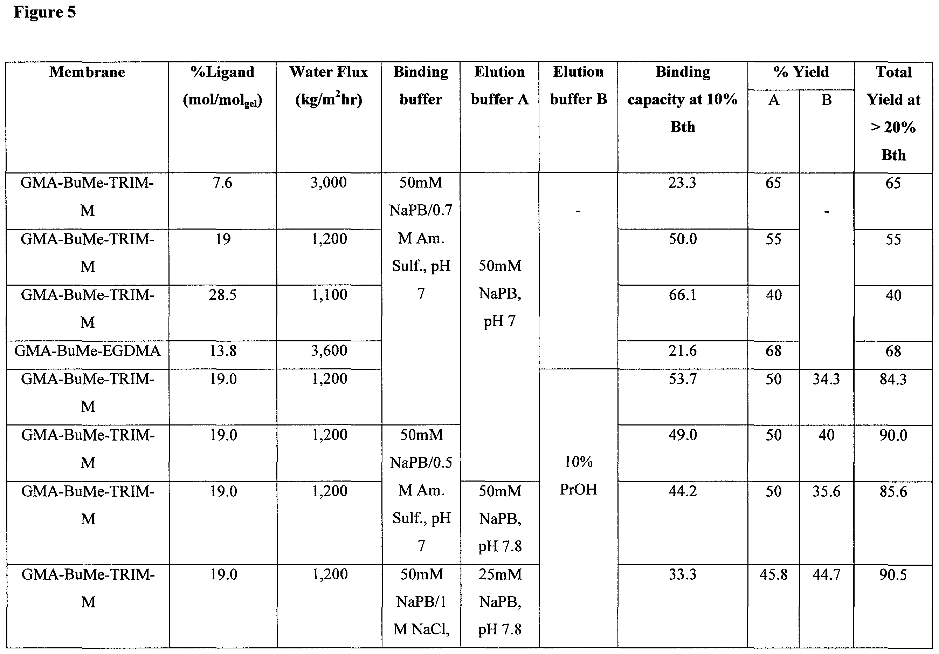

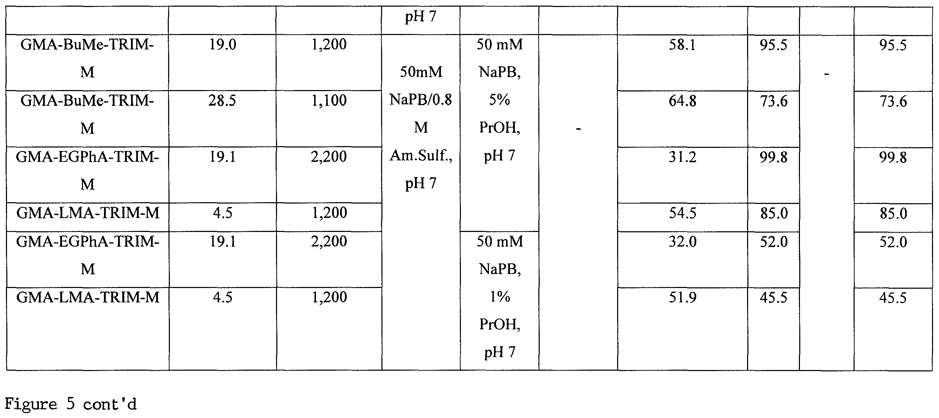

**Figure 5** tabulates a summary of various composite materials of the invention and various performance characteristics. In this table, EGDMA is ethylene glycol dimethacrylate, and EGPhA is ethylene glycol phenyl ether acrylate.

## DETAILED DESCRIPTION OF THE INVENTION

*Overview*

The invention is as set out in the claims.
In certain embodiments, the invention relates to a composite material comprising a macroporous gel within a porous support member. The composite materials are suited for the removal or purification and recovery of hydrophobic solutes, such as proteins and other biomolecules, via adsorption/desorption processes. In certain embodiments, the invention relates to a composite material that is simple and inexpensive to produce.

In certain embodiments, the invention relates to the purification or separation of biomolecules based on differences in surface hydrophobicity. In certain embodiments, biomolecules may be selectively purified in a single step. In certain embodiments, the composite materials demonstrate exceptional performance in comparison to commercially available HIC resins or membranes. In certain embodiments, the composite materials demonstrate comparable performance at higher flow rates than can be achieved with commercially available HIC resins.

*Various Characteristics of Exemplary Composite Materials*

Composition of the Macroporous Gels

In certain embodiments, the macroporous gels may be formed through the in situ reaction of one or more polymerizable monomers with one or more cross-linkers. In certain embodiments, the macroporous gels may be formed through the reaction of one or more crosslinkable polymers with one or more cross-linkers. In certain embodiments, a cross-linked gel having macropores of a suitable size may be formed.

The macroporous gel can be selected to comprise hydrophobic monomers. Copolymers of these monomers can be used. A macroporous gel comprising hydrophobic monomers can be used to capture molecules from fluids passing through the pores by hydrophobic interactions. In certain embodiments, the macroporous cross-linked gel comprises a plurality of pendant hydrophobic moieties selected from the group consisting of alkyl, alkenyl, aryl, aralkyl, alkaryl, and aralkoxy groups. In certain embodiments, the alkyl portion may have 1-20 carbon atoms, to which groups of the type hydroxy or halogen may be bound. In certain embodiments, alkyl groups may be branched. In certain embodiments, the branched alkyl functional group may have from 3 to 8 carbon atoms. In certain embodiments, the branched alkyl functional group may contain a sec-carbon, a tert-carbon, or a neo-carbon atom. In certain embodiments, the branched alkyl functional group may be selected from the group consisting of sec-butyl, tert-butyl, tert-pentyl, tert-hexyl, and neopentyl. In certain embodiments, the alkyl group may have from 3 to 8 carbon atoms. In certain embodiments, the alkyl group may have greater than 8 carbon atoms. In certain embodiments, the alkyl group may have greater than 8 carbon atoms and the composite material may still be an effective hydrophobic interaction chromatography medium. This result is contrary to at least one reference that implies that materials having pendant groups longer than $C_8$ will be ineffective as HIC media, and will function only as reverse phase chromatography media. Hydrophobic Interaction Chromatography: Principles and Methods; Amersham Pharmacia Biotech AB: Uppsala, Sweden, 2000. In certain embodiments, the aryl groups may be phenyl or naphthyl, optionally substituted with one or more nitro groups, halogen atoms, or alkyl groups. In certain embodiments, the pendant hydrophobic moiety may be an acyl group, such as alkanoyl or aroyl, which may contain 2-20 carbon atoms and may be substituted with one or more halogen atoms, nitro, or hydroxy groups. In certain embodiments, the pendant hydrophobic moiety may be an aroyl group, such as benzoyl, chlorbenzoyl, naphthoyl, or nitro benzoyl.

In certain embodiments, suitable monomers may be selected based on their partition coefficients. A partition coefficient (log P value) is the ratio of the equilibrium concentrations of an un-ionized compound between two immiscible solvents. In other words, the coefficients are an estimation of differential solubility of the compound between the two solvents. In certain embodiments, a portion of the monomers used in the preparation of the inventive composite materials are hydrophobic. For example, ethyl acrylate has an estimated log P (octanol-water) of about 1.2, phenyl acrylate has an estimated log P (octanol-water) of about 1.9, and lauryl methacrylate has an estimated log P (octanol-water) of about 6.7. In the present invention, a first monomer is copolymerized with a second monomer, wherein the first monomer has a log P value (octanol-water) from 1 to 7; and the second monomer has a log P value (octanol-water) from -1 to 1. In certain embodiments, the molar ratio of first monomer to second monomer may be from about 0.01:1 to about 1:1. In certain embodiments, the molar ratio of first monomer to second monomer may be from about 0.05:1 to about 0.5:1. In certain embodiments, the molar ratio of first monomer to second monomer may be about 0.1:1, about 0.15:1, or about 0.20:1. Monomers and their estimated log P values (octanol-water) are provided in Table 1.

**Table 1.** Estimated log P values (octanol-water) of various monomers

| Monomer | log $P_{octanol/water}$ |
|---|---|
| acrylamide | -0.8 |
| N-vinyl-2-pyrrolidinone | 0.2 |
| 2-hydroxyethyl methacrylate | 0.3 |
| methyl acrylate | 0.7 |
| glycidyl methacrylate | 0.8 |
| ethyl acrylate | 1.2 |
| methyl methacrylate | 1.3 |
| phenyl acrylate | 1.9 |
| n-butyl acrylate | 2.2 |
| n-butyl methacrylate | 2.8 |

(continued)

| Monomer | log $P_{octanol/water}$ |
|---|---|
| n-hexyl acrylate | 3.2 |
| 2-ethylhexyl acrylate | 4.1 |
| n-octyl acrylate | 4.2 |
| n-decyl acrylate | 5.2 |
| lauryl acrylate | 6.1 |
| lauryl methacrylate | 6.7 |

In certain embodiments, the monomer may comprise a reactive functional group. In certain embodiments, the reactive functional group of the monomer may be reacted with any of a variety of specific ligands. In certain embodiments, the reactive functional group of the monomer may be reacted with a hydrophobic moiety. In certain embodiments, this technique allows for partial or complete control of ligand density or pore size. In certain embodiments, the functionalization of the monomer with a hydrophobic moiety imparts further hydrophobic character to the resulting gel. In certain embodiments, the reactive functional group of the monomer may be functionalized prior to the gel-forming reaction. In certain embodiments, the reactive functional group of the monomer may be functionalized subsequent to the gel-forming reaction. For example, if the monomer is glycidyl methacrylate, the epoxide functionality of the monomer may be reacted with butyl amine to introduce butyl functionality into the resultant polymer. In certain embodiments, monomers, such as glycidyl methacrylate, may be further functionalized. In certain embodiments, if this technique is used, suitable monomers are not identified by their log P values, but by the overall hydrophobicity of the resultant polymer after functionalization.

The cross-linking agent is trimethylolpropane trimethacrylate.

In certain embodiments, the size of the macropores in the resulting gel increases as the concentration of cross-linking agent is increased. For example, the molar ratio of cross-linking agent to monomer(s) may be in the range from about 5:95 to about 70:30, in the range from about 10:90 to about 50:50, or in the range from about 15:85 to about 45:55. In certain embodiments, the molar ratio of cross-linking agent to monomer(s) may be about 10%, about 11%, about 12%, about 13%, about 14%, about 15%, about 16%, about 17%, about 18%, about 19%, about 20%, about 21%, about 22%, about 23%, about 24%, or about 25%.

In certain embodiments, the properties of the composite materials may be tuned by adjusting the average pore diameter of the macroporous gel. The size of the macropores is generally dependent on the nature and concentration of the cross-linking agent, the nature of the solvent or solvents in which the gel is formed, the amount of any polymerization initiator or catalyst and, if present, the nature and concentration of porogen. In certain embodiments, the composite material may have a narrow pore-size distribution.

Porous Support Member

In some embodiments, the porous support member is made of polymeric material and contains pores of average size between about 0.1 and about 25 $\mu$m, and a volume porosity between about 40% and about 90%. Many porous substrates or membranes can be used as the support member but the support may be a polymeric material. In certain embodiments, the support may be a polyolefin, which is available at low cost. In certain embodiments, the polyolefin may be poly(ethylene), poly(propylene), or poly(vinylidene difluoride). Extended polyolefin membranes made by thermally induced phase separation (TIPS), or non-solvent induced phase separation are mentioned. In certain embodiments, the support member may be made from natural polymers, such as cellulose or its derivatives. In certain embodiments, suitable supports include polyethersulfone membranes, poly(tetrafluoroethylene) membranes, nylon membranes, cellulose ester membranes, or filter papers.

In certain embodiments, the porous support is composed of woven or non-woven fibrous material, for example, a polyolefin such as polypropylene. Such fibrous woven or non-woven support members can have pore sizes larger than the TIPS support members, in some instances up to about 75 $\mu$m. The larger pores in the support member permit formation of composite materials having larger macropores in the macroporous gel. Non-polymeric support members can also be used, such as ceramic-based supports. The porous support member can take various shapes and sizes.

In some embodiments, the support member is in the form of a membrane that has a thickness from about 10 to about 2000 $\mu$m, from about 10 to about 1000 $\mu$m, or from about 10 to about 500 $\mu$m. In other embodiments, multiple porous support units can be combined, for example, by stacking. In one embodiment, a stack of porous support membranes, for example, from 2 to 10 membranes, can be assembled before the macroporous gel is formed within the void of the porous support. In another embodiment, single support member units are used to form composite material membranes, which are then stacked before use.

Relationship Between Macroporous Gel and Support Member

The macroporous gel may be anchored within the support member. The term "anchored" is intended to mean that the gel is held within the pores of the support member, but the term is not necessarily restricted to mean that the gel is chemically bound to the pores of the support member. The gel can be held by the physical constraint imposed upon it by enmeshing and intertwining with structural elements of the support member, without actually being chemically grafted to the support member, although in some embodiments, the macroporous gel may be grafted to the surface of the pores of the support member.

Because the macropores are present in the gel that occupies the pores of the support member, the macropores of the gel must be smaller than the pores of the support member. Consequently, the flow characteristics and separation characteristics of the composite material are dependent on the characteristics of the macroporous gel, but are largely independent of the characteristics of the porous support member, with the proviso that the size of the pores present in the support member is greater than the size of the macropores of the gel. The porosity of the composite material can be tailored by filling the support member with a gel whose porosity is partially or completely dictated by the nature and amounts of monomer or polymer, cross-linking agent, reaction solvent, and porogen, if used. As pores of the support member are filled with the same macroporous gel material, a high degree of consistency is achieved in properties of the composite material, and for a particular support member these properties are determined partially, if not entirely, by the properties of the macroporous gel. The net result is that the invention provides control over macropore-size, permeability and surface area of the composite materials.

The number of macropores in the composite material is not dictated by the number of pores in the support material. The number of macropores in the composite material can be much greater than the number of pores in the support member because the macropores are smaller than the pores in the support member. As mentioned above, the effect of the pore-size of the support material on the pore-size of the macroporous gel is generally negligible. An exception is found in those cases where the support member has a large difference in pore-size and pore-size distribution, and where a macroporous gel having very small pore-sizes and a narrow range in pore-size distribution is sought. In these cases, large variations in the pore-size distribution of the support member are weakly reflected in the pore-size distribution of the macroporous gel. In certain embodiments, a support member with a somewhat narrow pore-size range may be used in these situations.

*Preparation of Composite Materials*

In certain embodiments, the composite materials of the invention may be prepared by single-step methods. In certain embodiments, these methods may use water or other environmentally benign solvents as the reaction solvent. In certain embodiments, the methods may be rapid and, therefore, may lead to easier manufacturing processes.

In certain embodiments, the composite materials of the invention may be prepared by mixing one or more monomers, one or more cross-linking agents, one or more initiators, and optionally one or more porogens, in one or more suitable solvents.

The method of the invention for making the composite material comprises the steps of: combining the first monomer, the second monomer, a photoinitiator, the cross-linking agent, and a solvent, thereby forming a monomeric mixture;

contacting a support member with the monomeric mixture, thereby forming a modified support member; wherein the support member comprises a plurality of pores extending through the support member, and the average pore diameter of the pores is about 0.1 to about 25 $\mu$m;

covering the modified support member with a polymeric sheet, thereby forming a covered support member; and irradiating the covered support member for a period of time, thereby forming a composite material.

In certain embodiments, the resulting mixture may be homogeneous. In certain embodiments, the mixture may be heterogeneous. In certain embodiments, the mixture may then be introduced into a suitable porous support, where a gel forming reaction may take place.

In certain embodiments, suitable solvents for the gel-forming reaction include 1,3-butanediol, di(propylene glycol) propyl ether, N,N-dimethylacetamide, di(propylene glycol) methyl ether acetate (DPMA), water, dioxane, dimethylsulfoxide (DMSO), dimethylformamide (DMF), acetone, ethanol, N-methylpyrrolidone (NMP), tetrahydrofuran (THF), ethyl acetate, acetonitrile, toluene, xylenes, hexane, N-methylacetamide, propanol, methanol, or mixtures thereof. In certain embodiments, solvents that have a higher boiling point may be used, as these solvents reduce flammability and facilitate manufacture. In certain embodiments, solvents that have a low toxicity may be used, so they may be readily disposed of after use. An example of such a solvent is dipropyleneglycol monomethyl ether (DPM).

In certain embodiments, a porogen may be added to the reactant mixture, wherein porogens may be broadly described as pore-generating additives. In certain embodiments, the porogen may be selected from the group consisting of thermodynamically poor solvents and extractable polymers, for example, poly(ethyleneglycol), surfactants, and salts.

In some embodiments, components of the gel forming reaction react spontaneously at room temperature to form the macroporous gel. In other embodiments, the gel forming reaction must be initiated. In certain embodiments, the gel forming reaction may be initiated by any known method, for example, through thermal activation or UV radiation. In certain embodiments, the reaction may be initiated by UV radiation in the presence of a photoinitiator. In certain embodiments, the photoinitiator may be selected from the group consisting of 2-hydroxy-1-[4-2(hydroxyethoxy)phenyl]-2-methyl-1-propanone (Irgacure® 2959), 2,2-dimethoxy-2-phenylacetophenone (DMPA), benzophenone, benzoin and benzoin ethers, such as benzoin ethyl ether and benzoin methyl ether, dialkoxyacetophenones, hydroxyalkylphenones, and $\alpha$-hydroxymethyl benzoin sulfonic esters. Thermal activation may require the addition of a thermal initiator. In certain embodiments, the thermal initiator may be selected from the group consisting of 1,1'-azobis(cyclohexanecarbonitrile) (VAZO® catalyst 88), azobis(isobutyronitrile) (AIBN), potassium persulfate, ammonium persulfate, and benzoyl peroxide.

In certain embodiments, the gel-forming reaction may be initiated by UV radiation. In certain embodiments, a photoinitiator may be added to the reactants of the gel forming reaction, and the support member containing the mixture of monomer, cross-linking agent, and photoinitiator may be exposed to UV radiation at wavelengths from about 250 nm to about 400 nm for a period of a few seconds to a few hours. In certain embodiments, the support member containing the mixture of monomer, cross-linking agent, and photoinitiator may be exposed to UV radiation at about 350 nm for a period of a few seconds to a few hours. In certain embodiments, the support member containing the mixture of monomer, cross-linking agent, and photoinitiator may be exposed to UV radiation at about 350 nm for about 10 minutes. In certain embodiments, visible wavelength light may be used to initiate the polymerization. In certain embodiments, the support member must have a low absorbance at the wavelength used so that the energy may be transmitted through the support member.

In certain embodiments, the rate at which polymerization is carried out may have an effect on the size of the macropores obtained in the macroporous gel. In certain embodiments, when the concentration of cross-linker in a gel is increased to sufficient concentration, the constituents of the gel begin to aggregate to produce regions of high polymer density and regions with little or no polymer, which latter regions are referred to as "macropores" in the present specification. This mechanism is affected by the rate of polymerization. In certain embodiments, the polymerization may be carried out slowly, such as when a low light intensity in the photopolymerization is used. In this instance, the aggregation of the gel constituents has more time to take place, which leads to larger pores in the gel. In certain embodiments, the polymerization may be carried out at a high rate, such as when a high intensity light source is used. In this instance, there may be less time available for aggregation and smaller pores are produced.

In certain embodiments, once the composite materials are prepared, they may be washed with various solvents to remove any unreacted components and any polymer or oligomers that are not anchored within the support. In certain embodiments, solvents suitable for the washing of the composite material include water, acetone, methanol, ethanol, and DMF.

*Exemplary Uses of the Composite Materials*

Disclosed and not according to the claimed invention is a method, wherein a fluid is passed through the macropores of the macroporous cross-linked gel of any one of the aforementioned composite materials. By tailoring the conditions for fractionation, good selectivity, even for substances of the same size, can be obtained.

Disclosed and not according to the claimed invention is a method of separating biomolecules, such as proteins or immunoglobulins, from solution based on specific interactions the biomolecules have with the composite materials. Disclosed and not according to the claimed invention is a method of purifying biomolecules such as proteins or immunoglobulins. Disclosed and not according to the claimed invention is a method of purifying proteins or monoclonal antibodies with high selectivity. Disclosed and not according to the claimed invention is a method, wherein the biological molecule or biological ion retains its tertiary or quaternary structure, which may be important in retaining biological activity. The biological molecules or biological ions that may be separated or purified include proteins such as albumins, e.g., bovine serum albumin, and lysozyme. The biological molecules or biological ions that may be separated include γ-globulins of human and animal origins, immunoglobulins such as IgG, IgM, or IgE of human and animal origins, proteins of recombinant and natural origin including protein A, phytochrome, halophilic protease, poly(3-hydroxybutyrate) depolymerase, aculaecin-A acylase, polypeptides of synthetic and natural origin, interleukin-2 and its receptor, enzymes such as phosphatase, dehydrogenase, ribonuclease A, etc., monoclonal antibodies, fragments of antibodies, trypsin and its inhibitor, albumins of varying origins, e.g., α-lactalbumin, human serum albumin, chicken egg albumin, ovalbumin etc., cytochrome C, immunoglobulins, myoglobulin, recombinant human interleukin, recombinant fusion protein, nucleic acid derived products, DNA and RNA of synthetic and natural origin, DNA plasmids, lectin, α-chymotrypsinogen, and natural products including small molecules. Disclosed and not according to the claimed invention is a method of recovering an antibody fragment from variants, impurities, or contaminants associated therewith. Biomolecule separation or purification may occur substantially in the macropores of the macroporous cross-linked gel.

Disclosed and not according to the claimed invention is a method of reversible adsorption of a substance. An adsorbed substance may be released by changing the liquid that flows through the macroporous gel. The uptake and release of substances may be controlled by variations in the composition of the macroporous cross-linked gel.

Disclosed and not according to the claimed invention is a method, wherein the substance may be applied to the composite material from a buffered solution. The buffer may be sodium phosphate. The concentration of the buffer may be about 25 mM, about 50 mM, about 0.1 M, or about 0.2 M. The pH of the buffered solution may be about 4, about 5, about 6, about 7, about 8, or about 9.

Disclosed and not according to the claimed invention is a method, wherein the substance may be eluted using varying concentrations of aqueous salt solutions. The salt may be selected from the group consisting of $(NH_4)_2SO_4$, $K_2SO_4$, glycine-HCl, phosphate, citric acid, sodium citrate, NaCl, $Na_2SO_4$, $NaPO_4$, sodium acetate, and $NH_4Cl$. The salt concentration may range from about 3.0 M to about 0.2 M. The salt concentration may be about 3.0 M, about 2.8 M, about 2.6 M, about 2.4 M, about 2.2 M, about 2.0 M, about 1.8 M, about 1.6 M, about 1.4 M, about 1.2 M, about 1.0 M, about 0.8 M, about 0.6 M, about 0.4 M, or about 0.2 M.

Disclosed and not according to the claimed invention is a method that exhibits high binding capacities. Disclosed and not according to the claimed invention is a method that exhibits binding capacities of about 10 mg/mL$_{membrane}$, about 15 mg/mL$_{membrane}$, about 20 mg/mL$_{membrane}$, about 25 mg/mL$_{membrane}$, about 30 mg/mL$_{membrane}$, about 35 mg/mL$_{membrane}$, about 40 mg/mL$_{membrane}$, about 45, mg/mL$_{membrane}$, or about 50 mg/mL$_{membrane}$ at 10% breakthrough.

The methods may result in binding capacities comparable to or higher than those reported with the use of conventional HIC resins. However, the methods may be run at a significantly higher flow rates, due to convective flow, than the flow rates achieved in methods using HIC resins. The methods may do not suffer from the problematic pressure drops associated with methods using HIC resins. The methods may also allow for higher binding capacities than those reported for commercially-available HIC membranes (see, e.g., Figure 3).

The flow rate during binding (the first flow rate) may be from about 0.1 to about 10 mL/min. The flow rate during elution (the second flow rate) may be from about 0.1 to about 10 mL/min. The first flow rate or the second flow rate may be about 0.1 mL/min, about 0.5 mL/min, about 1.0 mL/min, about 1.5 mL/min, about 2.0 mL/min, about 2.5 mL/min, about 3.0 mL/min, about 4.0 mL/min, about 4.5 mL/min, about 5.0 mL/min, about 5.5 mL/min, about 6.0 mL/min, about 6.5 mL/min, about 7.0 mL/min, about 7.5 mL/min, about 8.0 mL/min, about 8.5 mL/min, about 9.0 mL/min, about 9.5 mL/min, or about 10.0 mL/min. The first flow rate or the second flow rate may be from about 0.5 mL/min to about 5.0 mL/min.

The water flux, $Q_{H2O}$ (kg/m2h), was calculated using the following equation:

$$Q_{H_2O} = \frac{(m_1 - m_2)}{A \cdot t}$$

where $m_1$ is the mass of container with the water sample, $m_2$ is the mass of container, $A$ is the active membrane surface area (38.5 cm$^2$) and $t$ is the time.

The hydrodynamic Darcy permeability, $k$ (m2) of the membrane can be calculated from the following equation:

$$k = \frac{Q_{H_2O}\eta\delta}{3600 d_{H_2O}\Delta P}$$

where $\eta$ is the water viscosity (Pa·s), $\delta$ is the membrane thickness (m), $d_{H2O}$ is the water density (kg/m3), and $\Delta P$ (Pa) is the pressure difference at which the flux, $Q_{H2O}$, was measured.

The hydrodynamic Darcy permeability of the membrane may be used to estimate an average hydrodynamic radius of the pores in the porous gel. The hydrodynamic radius, $r_h$, is defined as the ratio of the pore volume to the pore wetted surface area and can be obtained from the Carman-Kozeny equation given in the book by J. Happel and H. Brenner, Low Reynolds Number Hydrodynamics, Noordhof Int. Publ., Leyden, 1973, p. 393:

$$k = \frac{\varepsilon r_h^2}{K}$$

where $K$ is the Kozeny constant and $\varepsilon$ is the membrane porosity. The Kozeny constant $K \approx 5$ for porosity $0.5 < \varepsilon < 0.7$. The porosity of the membrane can be estimated from porosity of the support by subtracting the volume of the gel polymer.

An additive may be added to the eluting salt solution (the second fluid, or the third or later fluid). The additive may be added in a low concentration (e.g., less than about 1 M, about 0.5 M, or about 0.2 M). The additive may be a water-miscible alcohol, a detergent, dimethyl sulfoxide, dimethyl formamide, or an aqueous solution of a chaotropic salt. Not wishing to be bound by any particular theory, the additive may decrease the surface tension of water, thus weakening the hydrophobic interactions to give a subsequent dissociation of the ligand-solute complex.

The methods may be a subsequent step in the purification of materials that have been precipitated with ammonium sulfate or eluted in high salt concentrations during ion-exchange chromatography. The methods may be used subsequent to an affinity chromatography step. The methods may be an intermediate purification step that separates the correctly folded form of a biomolecule, such as a growth factor (e.g., IGF-1), from a misfolded, yet stable form, which might be generated in a refolding process.

Disclosed and not according to the claimed invention is a one-step method of biomolecule purification. Disclosed and not according to the claimed invention is a method of biomolecule separation that is easier to scale-up, is less labor intensive, is faster, and has lower capital costs than the commonly used conventional packed-column chromatography techniques.

*Exemplary Composite Materials*

In certain embodiments, the invention relates to a composite material, comprising:

a support member, comprising a plurality of pores extending through the support member; and
a macroporous cross-linked gel, comprising a plurality of macropores, and a plurality of pendant hydrophobic moieties;
wherein the macroporous cross-linked gel is located in the pores of the support member; and the average pore diameter of the macropores is less than the average pore diameter of the pores, wheren the macroporous cross-linked gel comprises a polymer formed through the in situ reaction of a first monomer and a second monomer and a cross-linking agent; and the first monomer has a log P value (octanol-water) from 1 to 7; and the second monomer has a log P value (octanol-water) from -1 to 1; and in that the first monomer is ethyl acrylate, methyl methacrylate, phenyl acrylate, n-butyl acrylate, n-butyl methacrylate, n-hexyl acrylate, 2-ethylhexyl acrylate, n-octyl acrylate, n-decyl acrylate, lauryl acrylate or lauryl methacrylate; and the second monomer is acrylamide, N-vinyl-2-pyrrolidinone, 2-hydroxyethyl methacrylate, methyl acrylate or glycidyl methacrylate; and in that the cross-linking agent is trimethylolpropane trimethacrylate.

In certain embodiments, the invention relates to any one of the aforementioned composite materials, wherein the pendant hydrophobic moieties are ethyl, butyl, hexyl, 2-ethylhexyl, dodecyl, stearyl, hydroxypropyl, phenyl, ether, or poly(propylene glycol) groups.

In certain embodiments, the invention relates to any one of the aforementioned composite materials, wherein the macroporous cross-linked gel comprises a polymer derived from a first monomer and a second monomer, the first monomer has a log P value (octanol-water) from 1 to 7; and the second monomer has a log P value (octanol-water) from -1 to 1.

In certain embodiments, the invention relates to any one of the aforementioned composite materials, wherein the molar ratio of the first monomer to the second monomer is about 0.01:1 to about 1:1.

In certain embodiments, the invention relates to any one of the aforementioned composite materials, wherein the molar ratio of the first monomer to the second monomer is about 0.05:1 to about 0.5:1.

In certain embodiments, the invention relates to any one of the aforementioned composite materials, wherein the molar ratio of the first monomer to the second monomer is about 0.1:1, about 0.15:1, or about 0.20:1.

In certain embodiments, the invention relates to any one of the aforementioned composite materials

wherein the macroporous cross-linked gel comprises macropores; the macroporous cross-linked gel has a volume porosity from about 30% to about 80%; and the macropores have an average pore diameter from about 10 nm to about 3000 nm.

In certain embodiments, the invention relates to any one of the aforementioned composite materials wherein the macroporous cross-linked gel comprises macropores; the macroporous cross-linked gel has a volume porosity from about 40% to about 70%. In certain embodiments, the invention relates to any one of the aforementioned composite materials wherein the macroporous cross-linked gel comprises macropores; the macroporous cross-linked gel has a volume porosity of about 40%, about 45%, about 50%, about 55%, about 60%, about 65%, or about 70%.

In certain embodiments, the invention relates to any one of the aforementioned composite materials, wherein the average pore diameter of the macropores is about 25 nm to about 1500 nm.

In certain embodiments, the invention relates to any one of the aforementioned composite materials, wherein the average pore diameter of the macropores is about 50 nm to about 1000 nm. In certain embodiments, the invention relates to any one of the aforementioned composite materials, wherein the average pore diameter of the macropores is about 50 nm, about 100 nm, about 150 nm, about 200 nm, about 250 nm, about 300 nm, about 350 nm, about 400 nm, about 450 nm, about 500 nm, about 550 nm, about 600 nm, about 650 nm, or about 700 nm.

In certain embodiments, the invention relates to any one of the aforementioned composite materials, wherein the average pore diameter of the macropores is from about 300 nm to about 400 nm.

In certain embodiments, the invention relates to any one of the aforementioned composite materials, wherein the composite material is a membrane.

In certain embodiments, the invention relates to any one of the aforementioned composite materials, wherein the support member has a void volume; and the void volume of the support member is substantially filled with the macroporous cross-linked gel.

In certain embodiments, the invention relates to any one of the aforementioned composite materials, wherein the support member comprises a polymer; the support member is about 10 μm to about 500 μm thick; the pores of the support member have an average pore diameter from about 0.1 μm to about 25 μm; and the support member has a volume porosity from about 40% to about 90%.

In certain embodiments, the invention relates to any one of the aforementioned composite materials, wherein the support member is about 10 μm to about 500 μm thick. In certain embodiments, the invention relates to any one of the aforementioned composite materials, wherein the support member is about 30 μm to about 300 μm thick. In certain embodiments, the invention relates to any one of the aforementioned composite materials, wherein the support member is about 30 μm, about 50 μm, about 100 μm, about 150 μm, about 200 μm, about 250 μm, or about 300 μm thick.

In certain embodiments, the invention relates to any one of the aforementioned composite materials, wherein the pores of the support member have an average pore diameter from about 0.1 μm to about 25 μm. In certain embodiments, the invention relates to any one of the aforementioned composite materials, wherein the pores of the support member have an average pore diameter from about 0.5 μm to about 15 μm. In certain embodiments, the invention relates to any one of the aforementioned composite materials, wherein the pores of the support member have an average pore diameter of about 0.5 μm, about 1 μm, about 2 μm, about 3 μm, about 4 μm, about 5 μm, about 6 μm, about 7 μm, about 8 μm, about 9 μm, about 10 μm, about 11 μm, about 12 μm, about 13 μm, about 14 μm, or about 15 μm.

In certain embodiments, the invention relates to any one of the aforementioned composite materials, wherein the support member has a volume porosity from about 40% to about 90%. In certain embodiments, the invention relates to any one of the aforementioned composite materials, wherein the support member has a volume porosity from about 50% to about 80%. In certain embodiments, the invention relates to any one of the aforementioned composite materials, wherein the support member has a volume porosity of about 50%, about 60%, about 70%, or about 80%.

In certain embodiments, the invention relates to any one of the aforementioned composite materials, wherein the support member comprises a polyolefin.

In certain embodiments, the invention relates to any one of the aforementioned composite materials, wherein the support member comprises a polymeric material selected from the group consisting of polysulfones, polyethersulfones, polyphenyleneoxides, polycarbonates, polyesters, cellulose and cellulose derivatives.

In certain embodiments, the invention relates to any one of the aforementioned composite materials, wherein the support member comprises a fibrous woven or non-woven fabric comprising a polymer; the support member is from about 10 μm to about 2000 μm thick; the pores of the support member have an average pore diameter of from about 0.1 μm to about 25 μm; and the support member has a volume porosity from about 40% to about 90%.

*Exemplary Methods*

Disclosed and not according to the claimed invention is a method, comprising the step of:
contacting at a first flow rate a first fluid comprising a substance with any one of the aforementioned composite materials, thereby adsorbing or absorbing a portion of the substance onto the composite material.

Disclosed and not according to the claimed invention is any one of the aforementioned methods, wherein the fluid flow path of the first fluid is substantially perpendicular to the pores of the support member.

Disclosed and not according to the claimed invention is any one of the aforementioned methods, wherein the fluid flow path of the first fluid is substantially through the macropores of the composite material.

Disclosed and not according to the claimed invention is any one of the aforementioned methods, further comprising the step of:

contacting at a second flow rate a second fluid with the substance adsorbed or absorbed onto the composite material, thereby releasing a portion of the substance from the composite material.

Disclosed and not according to the claimed invention is any one of the aforementioned methods, wherein the fluid flow path of the second fluid is substantially perpendicular to the pores of the support member.

Disclosed and not according to the claimed invention is any one of the aforementioned methods, wherein the fluid flow path of the second fluid is substantially through the macropores of the composite material.

Disclosed and not according to the claimed invention is any one of the aforementioned methods, wherein the macroporous gel displays a specific interaction for the substance.

Disclosed and not according to the claimed invention is any one of the aforementioned methods, wherein the specific interaction is a hydrophobic interaction.

Disclosed and not according to the claimed invention is any one of the aforementioned methods, wherein the substance is a biological molecule or biological ion.

Disclosed and not according to the claimed invention is any one of the aforementioned methods, wherein the biological molecule or biological ion is selected from the group consisting of albumins, lysozyme, viruses, cells, $\gamma$-globulins of human and animal origins, immunoglobulins of human and animal origins, proteins of recombinant and natural origins, polypeptides of synthetic and natural origins, interleukin-2 and its receptor, enzymes, monoclonal antibodies, trypsin and its inhibitor, cytochrome C, myoglobin, myoglobulin, $\alpha$-chymotrypsinogen, recombinant human interleukin, recombinant fusion protein, nucleic acid derived products, DNA of synthetic and natural origins, and RNA of synthetic and natural origins.

Disclosed and not according to the claimed invention is any one of the aforementioned methods, wherein the biological molecule or biological ion is lysozyme, hIgG, myoglobin, human serum albumin, soy trypsin inhibitor, transferring, enolase, ovalbumin, ribonuclease, egg trypsin inhibitor, cytochrome c, Annexin V, or $\alpha$-chymotrypsinogen.

Disclosed and not according to the claimed invention is any one of the aforementioned methods, wherein the first fluid is a buffer. Disclosed and not according to the claimed invention is any one of the aforementioned methods, wherein the concentration of the buffer in the first fluid is about 25 mM, about 50 mM, about 0.1 M, or about 0.2 M. Disclosed and not according to the claimed invention is any one of the aforementioned methods, wherein the pH of the first fluid is about 4, about 5, about 6, about 7, about 8, or about 9.

Disclosed and not according to the claimed invention is any one of the aforementioned methods, wherein the second fluid is a salt solution. Disclosed and not according to the claimed invention is any one of the aforementioned methods, wherein the salt is selected from the group consisting of $(NH_4)_2SO_4$, $K_2SO_4$, glycine-HCl, phosphate, citric acid, sodium citrate, NaCl, $Na_2SO_4$, $NaPO_4$, sodium acetate, and $NH_4Cl$. Disclosed and not according to the claimed invention is any one of the aforementioned methods, wherein the salt concentration in the second fluid is from about 3.0 M to about 0.2 M. Disclosed and not according to the claimed invention is any one of the aforementioned methods, wherein the salt concentration is about 3.0 M, about 2.8 M, about 2.6 M, about 2.4 M, about 2.2 M, about 2.0 M, about 1.8 M, about 1.6 M, about 1.4 M, about 1.2 M, about 1.0 M, about 0.8 M, about 0.6 M, about 0.4 M, or about 0.2 M.

Disclosed and not according to the claimed invention is any one of the aforementioned methods, wherein the first flow rate is from about 0.1 to about 10 mL/min. Disclosed and not according to the claimed invention is any one of the aforementioned methods, wherein the second flow rate is from about 0.1 to about 10 mL/min. Disclosed and not according to the claimed invention is any one of the aforementioned methods, wherein the first flow rate or the second flow rate is about 0.1 mL/min, about 0.5 mL/min, about 1.0 mL/min, about 1.5 mL/min, about 2.0 mL/min, about 2.5 mL/min, about 3.0 mL/min, about 4.0 mL/min, about 4.5 mL/min, about 5.0 mL/min, about 5.5 mL/min, about 6.0 mL/min, about 6.5 mL/min, about 7.0 mL/min, about 7.5 mL/min, about 8.0 mL/min, about 8.5 mL/min, about 9.0 mL/min, about 9.5 mL/min, or about 10.0 mL/min. Disclosed and not according to the claimed invention is any one of the aforementioned methods, wherein the first flow rate or the second flow rate is from about 0.5 mL/min to about 5.0 mL/min.

Disclosed and not according to the claimed invention is any one of the aforementioned methods, further comprising the step of:

contacting a third fluid with the substance adsorbed or absorbed onto the composite material, thereby releasing a portion of the substance from the composite material; wherein the third fluid is a salt solution; and the salt concentration of the third fluid is less than the salt concentration of the second fluid.

The invention relates to a method of making a composite material according to the invention, comprising the steps of:

combining the first monomer, the second monomer, a photoinitiator, the cross-linking agent, and a solvent, thereby forming a monomeric mixture;

contacting a support member with the monomeric mixture, thereby forming a modified support member; wherein the support member comprises a plurality of pores extending through the support member, and the average pore diameter of the pores is about 0.1 to about 25 μm;

covering the modified support member with a polymeric sheet, thereby forming a covered support member; and

irradiating the covered support member for a period of time, thereby forming a composite material.

In certain embodiments, the invention relates to any one of the aforementioned methods, further comprising the step of washing the composite material with a second solvent.

In certain embodiments, the invention relates to any one of the aforementioned methods, wherein the photoinitiator is present in the monomeric mixture in an amount from about 0.4% (w/w) to about 2.5% (w/w) relative to the total weight of monomer.

In certain embodiments, the invention relates to any one of the aforementioned methods, wherein the photoinitiator is present in the monomeric mixture in about 0.6%, about 0.8%, about 1.0%, about 1.2%, or about 1.4% (w/w) relative to the total weight of monomer.

In certain embodiments, the invention relates to any one of the aforementioned methods, wherein the photo initiator is selected from the group consisting of 1-[4-(2-hydroxyethoxy)-phenyl]-2-hydroxy-2-methyl-1-propane-1-one, 2,2-dimethoxy-2-phenylacetophenone, benzophenone, benzoin and benzoin ethers, dialkoxyacetophenones, hydroxyalkylphenones, and α-hydroxymethyl benzoin sulfonic esters.

In certain embodiments, the invention relates to any one of the aforementioned methods, wherein the solvent is 1,3-butanediol, di(propylene glycol) propyl ether, N,N-dimethylacetamide, di(propylene glycol) methyl ether acetate (DPMA), water, dioxane, dimethylsulfoxide (DMSO), dimethylformamide (DMF), acetone, ethanol, N-methylpyrrolidone (NMP), tetrahydrofuran (THF), ethyl acetate, acetonitrile, toluene, xylenes, hexane, N-methylacetamide, propanol, or methanol.

In certain embodiments, the invention relates to any one of the aforementioned methods, wherein the monomer or the cross-linking agent or both are present in the solvent in about 10% to about 45% (w/w).

In certain embodiments, the invention relates to any one of the aforementioned methods, wherein the monomer or the cross-linking agent or both are present in the solvent in an amount of about 15%, about 16%, about 17%, about 18%, about 19%, about 20%, about 21%, about 22%, about 23%, about 24%, about 25%, about 26%, about 27%, about 28%, about 29%, about 30%, about 31%, about 32%, about 33%, about 34%, about 35%, about 36%, about 37%, about 38%, about 39%, or about 40% (w/w).

The invention relates to any one of the aforementioned methods, wherein the cross-linking agent is trimethylolpropane trimethacrylate.

In certain embodiments, the invention relates to any one of the aforementioned methods, wherein the mol% of cross-linking agent relative to monomer is about 10%, about 11%, about 12%, about 13%, about 14%, about 15%, about 16%, about 17%, about 18%, about 19%, about 20%, about 21%, about 22%, about 23%, about 24%, or about 25%.

In certain embodiments, the invention relates to any one of the aforementioned methods, wherein the covered support member is irradiated at about 350 nm.

In certain embodiments, the invention relates to any one of the aforementioned methods, wherein the period of time is about 1 minute, about 5 minutes, about 10 minutes, about 15 minutes, about 20 minutes, about 30 minutes, about 45 minutes, or about 1 hour.

In certain embodiments, the invention relates to any one of the aforementioned methods, wherein the composite material comprises macropores.

In certain embodiments, the invention relates to any one of the aforementioned methods, wherein the average pore diameter of the macropores is less than the average pore diameter of the pores.

## EXEMPLIFICATION

The following examples are provided to illustrate the invention. It will be understood, however, that the specific details given in each example have been selected for purpose of illustration and are not to be construed as limiting the scope of the invention. Generally, the experiments were conducted under similar conditions unless noted.

*Example 1 - General Procedures*

Preparation of Composite Materials

A composite material was prepared from the monomer solutions described below and the support TR0671 B50 (Hollingsworth & Vose) using the photoinitiated polymerization according to the following general procedure. A weighed support member was placed on a poly(ethylene) (PE) sheet and a monomer or polymer solution was applied to the sample. The sample was subsequently covered with another PE sheet and a rubber roller was run over the sandwich to remove excess solution. In situ gel formation in the sample was induced by polymerization initiated by irradiation with the wavelength of 350 nm for a period of 10 minutes. The resulting composite material was thoroughly washed with RO water and placed into 0.1 N hydrochloric acid for 24 h to hydrolyze residual epoxide groups. (Although the epoxide hydrolysis step was executed in each of the following examples, this step may be omitted). Membrane was stored in water for 24 h and then dried at room temperature. To determine the amount of gel formed in the support, the sample was dried in an oven at 50 °C to a constant mass. The mass gain due to gel incorporation was calculated as a ratio of add-on mass of the dry gel to the initial mass of the porous support.

Analysis of Flux and Binding Capacity of Composite Materials

Water flux measurements through the composite materials were carried out after the samples had been washed with water. As a standard procedure, a sample in the form of a disk of diameter 7.8 cm was mounted on a sintered grid of 3-5 mm thickness and assembled into a cell supplied with compressed nitrogen at a controlled pressure. The cell was filled with deionised water and pressure of 100 kPa was applied. The water that passed through the composite material in a specified time was collected in a pre-weighed container and weighed. All experiments were carried out at room temperature and at atmospheric pressure at the permeate outlet. Each measurement was repeated three or more times to achieve reproducibility of $\pm 5\%$.

Protein adsorption experiments were carried out with lysozyme and hIgG. In an adsorption step, a composite material sample in a form of a single membrane disk of diameter 25 mm was mounted on a sintered grid of 2 mm thickness in a dead-end cell.

The feed solution supplied to the cell by a peristaltic pump (model P-1, Pharmacia Biotech). The permeate outlet was connected to a multi-wavelength UV detector (Waters 490). The detector plotter output was connected to a digital multimeter with PC interface and through the multimeter to PC. The detector output was recorded every minute with an accuracy of $\pm$ 1 mV.

The cell and the membrane sample were primed by passing 20 mM sodium phosphate buffer containing ammonium sulphate salt of various concentrations at pH 7.0 until a stable base line in the UV detector at 280 nm was established. In the next step, the cell was emptied and refilled with the feed -- lysozyme or hIgG solution in corresponding buffers. All buffers, lysozyme and hIgG solutions were filtered through a cellulose acetate membrane filter with pore size of 0.2 $\mu$m. The pump was turned on immediately along with the PC recording of the detector output. Permeate samples were collected and weighed to check the flow rate.

*Example 2 - Butyl-Functionalized Composite Material*

A 23 wt% solution was prepared by dissolving glycidyl methacrylate (GMA) monomer, butyl methacrylate (BuMe) co-monomer and trimethylolpropane trimethacrylate (TRIM-M) cross-linker in a molar ratio of 1:0.15:0.2, respectively, in a solvent mixture containing 22.4 wt% 1,3-butanediol, 54.3 wt% di(propylene glycol) propyl ether and 23.3 wt% N,N'-dimethylacetamide. The photoinitiator Irgacure® 2959 was added in the amount of 1 wt% with respect to the mass of the monomers.

Several samples similar to that described above were prepared and averaged to estimate the mass gain of the composite material. The substrate gained 180% of the original weight in this treatment.

The composite material produced by this method had a water flux in the range of 1,200-1,400 kg/m$^2$h at 100 kPa. The lysozyme (LYS) and hIgG adsorption characteristics of the composite material were examined using the general procedure for a single membrane disk as described above. The concentration of the lysozyme used in this experiment was 0.45 g/L in 20 mM sodium phosphate buffer containing 2.0 M $(NH_4)_2SO_4$, at pH 7.0 and hIgG - 0.5 g/L in 20 mM sodium phosphate buffer containing 1.5 N $(NH_4)_2SO_4$ at pH 7.0. The flow rate was 10 bed volume (BV)/min. A plot of the concentration of LYS in the permeate (membrane breakthrough) vs. the LYS dynamic binding capacity (mg/mL) is shown in Figure 1. The composite material had a LYS and hIgG binding capacity of 34 mg/mL$_{membrane}$ and 41 mg/mL$_{membrane}$ correspondingly at 10% breakthrough. Desorption was effected with 20mM sodium phosphate buffer. The elution fractions were collected for spectrophotometric determinations at 280 nm. The recovery was estimated from the volume and the absorbance of the elution sample. The results indicated a LYS and hIgG recovery of 90% and 75%, respectively.

*Example 3 - Phenyl-Functionalized Composite Material*

A 32 wt% solution was prepared by dissolving glycidyl methacrylate (GMA) monomer, phenyl acrylate (PhA) co-monomer and trimethylolpropane trimethacrylate (TRIM-M) cross-linker in a molar ratio of 1:0.1:0.13, respectively, in a solvent mixture containing 22.3 wt% 1,3-butanediol, 55.0 wt% di(propylene glycol) propyl ether and 22.7 wt% N,N'-dimethylacetamide. The photoinitiator Irgacure® 2959 was added in the amount of 1 wt% with respect to the mass of the monomers.

Several samples similar to that described above were prepared and averaged to estimate the mass gain of the composite material. The substrate gained 170% of its original weight in this treatment.

The composite material produced by this method had a water flux in the range of 1,200-1,300 kg/m$^2$h at 100 kPa. The lysozyme (LYS) and hIgG adsorption characteristics of the composite material were examined using the general procedure for a single membrane disk described above (Example 2). The concentration of the protein used in this experiment and flow rates were the same as describe in Example 2. A plot of the concentration of LYS in the permeate vs. the LYS dynamic binding capacity (mg/mL) is shown in Figure 1. The composite material showed a LYS and hIgG binding capacity of 24 mg/mL$_{membrane}$ and 28.2 mg/mL$_{membrane}$ at 10% breakthrough, respectively. The recovery of LYS was found in the range of 85-90%, and of hIgG was 70%.

*Example 4 - Dodecyl-Functionalized Composite Material*

A 25.7 wt% solution was prepared by dissolving glycidyl methacrylate (GMA) monomer, lauryl methacrylate (LMA, dodecyl methacrylate) co-monomer and trimethylolpropane trimethacrylate (TRIM-M) cross-linker in a molar ratio of 1:0.1:0.23, respectively, in a solvent mixture containing 24.3 wt% 1,3-butanediol, 53.6 wt% di(propylene glycol) propyl ether and 22.1 wt% N,N'-dimethylacetamide. The photoinitiator Irgacure® 2959 was added in the amount of 1 wt% with respect to the mass of the monomers.

Several samples similar to that described above were prepared and averaged to estimate the mass gain of the composite material. The substrate gained 180% of its original weight in this treatment.

The composite material produced by this method had a water flux in the range of 1,200-1,300 kg/m$^2$h at 100 kPa. A plot of the concentration of LYS in the permeate vs. the LYS dynamic binding capacity (mg/mL) is shown in Figure 1. The composite material showed a LYS and hIgG binding capacity of 41 mg/mL$_{membrane}$ and 49.4 mg/mL$_{membrane}$ at 10% breakthrough, respectively. The LYS and hIgG recoveries were 80-85% and 75%, respectively.

*Example 5 - Butyl-Functionalized Composite Materials with Vinyl Pyrrolidinone and Acrylamide Co-Monomers*

A 19.0 wt% solution was prepared by dissolving 1-vinyl-2-pyrrolidinone (VP) monomer, acrylamide (AAm) co-monomer-1, butyl methacrylate (BuMe) co-monomer-2 and trimethylolpropane trimethacrylate (TRIM-M) cross-linker in a molar ratio of 1:0.1:0.14:0.27, respectively, in a solvent mixture containing 99 wt% di(propylene glycol) methyl ether acetate (DPMA) and 1 wt% DI water. The photoinitiator Irgacure® 2959 was added in the amount of 1 wt% with respect to the mass of the monomers.

Several samples similar to that described above were prepared and averaged to estimate the mass gain of the composite material. The substrate gained 150% of its original weight in this treatment.

The composite material produced by this method had a water flux in the range of 1,000-1,100 kg/m$^2$h at 100 kPa. The protein (lysozyme (LYS)) and hIgG adsorption characteristics of the composite material were examined using the general procedure for a single membrane disk described above (Example 2). The concentration of lysozyme/hIgG used in this experiment was the same as described in Example 2. The flow rate was 8 bed volume (BV)/min. A plot of the concentration of LYS in the permeate vs. the LYS dynamic binding capacity (mg/mL) is shown in Figure 2. The composite material showed a LYS and hIgG binding capacity of 15 mg/mL$_{membrane}$ and 20 mg/mL$_{membrane}$ at 10% breakthrough, respectively. The LYS/hIgG recovery was in range of 70-75%.

*Example 6 - Butyl-Functionalized Composite Materials with Hydroxyethyl Methacrylate Co-Monomer*

A 36.0 wt% solution was prepared by dissolving 2-hydroxyethyl methacrylate (HEMA) monomer, butyl methacrylate (BuMe) co-monomer and trimethylolpropane trimethacrylate (TRIM-M) cross-linker in a molar ratio of 1:0.1:0.12, respectively, in di(propylene glycol) methyl ether acetate (DPMA). The photoinitiator Irgacure® 2959 was added in the amount of 1 wt% with respect to the mass of the monomers.

A composite material was prepared from the solution and the support TR0671 B50 (Hollingsworth & Vose) using the photoinitiated polymerization according to the general procedure describe above (Example 1). The irradiation time used was 10 minutes at 350 nm. The composite material was removed from between the polyethylene sheets, washed with RO water. The membrane was stored in water for 24 h and dried at room temperature.

Several samples similar to that described above were prepared and averaged to estimate the mass gain of the composite material. The substrate gained 130% of its original weight in this treatment.

The membrane was characterized in terms of water flux and lysozyme/hIgG binding capacity as described in Example 2.

The composite material produced by this method had a water flux in the range of 3,200-3,500 kg/m$^2$h at 100 kPa. The lysozyme/hIgG adsorption characteristic of the composite material was examined using the general procedure. Two membrane disks were used. The concentration of lysozyme/hIgG used in this experiment was the same as described in Example 2. The flow rate was 5 bed volume (BV)/min. A plot of the concentration of LYS in the permeate vs. the LYS dynamic binding capacity (mg/mL) is shown in Figure 2. The composite material showed a LYS and hIgG binding capacity of 15 mg/mL$_{membrane}$ and 17 mg/mL$_{membrane}$ at 10% breakthrough, respectively. The recovery of LYS was found to be in the range of 80%, and of hIgG was in the range of 70%.

*Example 7 - Gradient chromatography*

To obtain the protein linear-gradient retention data, the poly(AAm-co-VP-co-BuMe) membrane prepared as described in Example 5 (25 mm in diameter; 0.14 mL) was used. Three proteins, varying in molecular weight and in the hydrophobicity of their surfaces, were examined in separation experiment. Proteins used were: myoglobin (from equine skeletal muscle, MW 17 kDa), lysozyme (from chicken egg white, MW 14.3 kDa), and α-chymotrypsinogen A (type II, from bovine pancreas, MW 25.7 kDa) (Sigma-Aldrich). All test salts and proteins, ammonium sulfate, and sodium monobasic and dibasic phosphate were purchased from Sigma-Aldrich. A Waters 600E HPLC system was used for carrying out the membrane chromatographic studies. A 2-mL sample loop was used for injecting protein solutions in separation experiments. The UV absorbance (at 280 nm) of the effluent stream from the Pall membrane holder and the system pressure were continuously recorded. A solution containing 2 M ammonium sulfate (pH 7.0) was chosen as a binding buffer which was prepared using 20 mM sodium phosphate buffer (pH 7.0) as a base buffer. The binding buffer was referred to as buffer A, and the elution buffer - 20 mM sodium phosphate (pH 7.0) - as buffer B. Proteins were dissolved in binding buffer (buffer A) to prepare 2 mg/mL solutions. The protein solutions were mixed in a ratio of 3:1:3 (myoglobin:lysozyme:$\alpha$-chymotrypsinogen A).

In chromatographic experiments, buffer A was passed through the membrane until a stable UV absorbance baseline was obtained. Then, 150 $\mu$L of protein mixture was injected using a 2-mL sample loop. Binding buffer was run for 5 min at 2 mL/min. Subsequently, elution was achieved in 15-min at a 2 mL/min descending salt gradient (0% buffer B - 100% buffer B). Figure 4 shows very good analytical separation of myoglobin, lysozyme and $\alpha$-chymotrypsinogen using one membrane disk at a flow rate of 2 mL/min. The first peak in Figure 4 was due to the bound and subsequently eluted myoglobin. The second peak is lysozyme, and the third peak is $\alpha$-chymotrypsinogen. The peak identities were confirmed in single-protein experiments. The elution times ($t_R$) of these proteins are presented in Table 2.

**Table** 2. Protein retention time based on individual capture/elution experiments

| Protein | Elution time (min) |
|---|---|
| Myoglobin | 10 |
| Lysozyme | 12.5 |
| $\alpha$-Chymotrypsinogen-A | 15.3 |

*Example 8 - Membrane Performance*

Figure 5 tabulates a summary of various composite materials of the invention and various performance characteristics. Each of the samples was made, hydrolyzed with 0.1 M HCl, dried in an oven at 50 °C, and re-wet for use, an important consideration for a practical material.

*Example 9 - Phenyl-Functionalized Composite Materials (Reference example)*

This example illustrates a method of preparing a composite material of the present invention with phenyl functional group.

A 32 wt% solution was prepared by dissolving glycidyl methacrylate (GMA) monomer, ethylene glycol phenyl ether methacrylate (EGPhA) co-monomer and trimethylolpropane trimethactylate (TRIM-M) cross-linker in a molar ratio of 1:0.2:0.18, respectively, in a solvent mixture containing 23.1 wt% 1,3-butanediol, 54.0 wt% di(propylene glycol) propyl ether and 22.9 wt% N,N'-dimethylacetamide. The photo-initiator Irgacure® 2959 was added in the amount of 1 wt% with respect to the mass of the monomers.

A composite material was prepared from the solution and the support TR0671 B50 (Hollingsworth & Vose) using the photoinitiated polymerization according to the general procedure describe above (Example 1). The irradiation time used was 10 minutes at 350 nm. The composite material was removed from between the polyethylene sheets, washed with RO water and placed into 0.1 N hydrochloric acid for 24 hrs to hydrolyze epoxy groups. Membrane was stored in water for 24 h and then dried at room temperature.

Several samples similar to that described above were prepared and averaged to estimate the mass gain of the composite material. The substrate gained 180% of the original weight in this treatment.

The composite material produced by this method had a water flux of 2,200 kg/m$^2$hr at 100 kPa. The hIgG adsorption characteristics of the composite material were examined using a single layer inserted into a stainless steel Natrix disk holder attached to Waters 600E HPLC system equipment. The concentration of the hIgG used in this experiment was 0.5 g/L in 50 mM sodium phosphate buffer containing 0.8 M $(NH_4)_2SO_4$, at pH 7.0. The flow rate was 10 bed volume (BV)/min. The composite material showed hIgG binding capacity of 31.2 mg/ml$_{membrane}$ at 10% breakthrough. Recovery for hIgG was 99.8 % using elution buffer containing 50 mM sodium phosphate with 5% (w/w) iso-propanol, pH 7.0.

**Claims**

1. A composite material, comprising:

> a support member, comprising a plurality of pores extending through the support member; and
> a macroporous cross-linked gel, comprising a plurality of macropores, and a plurality of pendant hydrophobic moieties;
> wherein the macroporous cross-linked gel is located in the pores of the support member; and the average pore diameter of the macropores is less than the average pore diameter of the pores, **characterised in that** the macroporous cross-linked gel comprises a polymer formed through the in situ reaction of a first monomer and a second monomer and a cross-linking agent; and the first monomer has a log P value (octanol-water) from 1 to 7; and the second monomer has a log P value (octanol-water) from -1 to 1; and **in that** the first monomer is ethyl acrylate, methyl methacrylate, phenyl acrylate, n-butyl acrylate, n-butyl methacrylate, n-hexyl acrylate, 2-ethylhexyl acrylate, n-octyl acrylate, n-decyl acrylate, lauryl acrylate or lauryl methacrylate; and the second monomer is acrylamide, N-vinyl-2-pyrrolidinone, 2-hydroxyethyl methacrylate, methyl acrylate or glycidyl methacrylate; and **in that** the cross-linking agent is trimethylolpropane trimethacrylate.

2. The composite material of claim 1, any one or more of the following applies,

   a) the pendant hydrophobic moieties are ethyl, butyl, hexyl, 2-ethylhexyl, dodecyl, stearyl, hydroxypropyl, phenyl, ether, or poly(propylene glycol) groups;
   b) the molar ratio of the first monomer to the second monomer is 0.01:1 to 1:1;
   c) the molar ratio of the first monomer to the second monomer is 0.05:1 to 0.5:1;
   d) the molar ratio of the first monomer to the second monomer is 0.1:1, 0.15:1, or 0.20:1;
   e) the macroporous cross-linked gel has a volume porosity from 30% to 80%; and the macropores have an average pore diameter from 10 nm to 3000 nm, wherein optionally any one of the following applies,

      i) the average pore diameter of the macropores is 25 nm to 1500 nm;
      ii) the average pore diameter of the macropores is 50 nm to 1000 nm; and
      iii) the average pore diameter of the macropores is from 300 nm to 400 nm; and

   f) the composite material is a membrane.

3. The composite material of claims 1 or 2, wherein the support member has a void volume; and the void volume of the support member is substantially filled with the macroporous cross-linked gel.

4. The composite material of any one of claims 1-3, wherein any one of the following applies,

   a) the support member comprises a polymer; the support member is 10 μm to 500 μm thick; the pores of the support member have an average pore diameter from 0.1 μm to 25 μm; and the support member has a volume porosity from 40% to 90%;
   b) the support member comprises a polyolefin;
   c) the support member comprises a polymeric material selected from the group consisting of polysulfones, polyethersulfones, polyphenyleneoxides, polycarbonates, polyesters, cellulose and cellulose derivatives; and

   d) the support member comprises a fibrous woven or non-woven fabric comprising a polymer; the support member is from 10 μm to 2000 μm thick; the pores of the support member have an average pore diameter of from 0.1 μm to 25 μm; and the support member has a volume porosity from 40% to 90%.

5. A method of making the composite material of claim 1, comprising the steps of:

   combining the first monomer, the second monomer, a photoinitiator, the cross-linking agent, and a solvent, thereby forming a monomeric mixture;
   contacting a support member with the monomeric mixture, thereby forming a modified support member; wherein the support member comprises a plurality of pores extending through the support member, and the average pore diameter of the pores is 0.1 to 25 μm;
   covering the modified support member with a polymeric sheet, thereby forming a covered support member; and
   irradiating the covered support member for a period of time, thereby forming a composite material.

6. The method of claim 5, wherein the method further comprises the step of washing the composite material with a second solvent.

7. The method of any one of claims 5 or 6, wherein

   a) the photoinitiator is present in the monomeric mixture in an amount from 0.4% (w/w) to 2.5% (w/w) relative to the total weight of monomer, or
   b) the photoinitiator is present in the monomeric mixture in 0.6%, 0.8%, 1.0%, 1.2%, or 1.4% (w/w) relative to the total weight of monomer.

8. The method of any one of claims 5-7, wherein

   a) the photoinitiator is selected from the group consisting of 1-[4-(2-hydroxyethoxy)-phenyl]-2-hydroxy-2-methyl-1-propane-1-one, 2,2-dimethoxy-2-phenylacetophenone, benzophenone, benzoin and benzoin ethers, dialkoxyacetophenones, hydroxyalkylphenones, and α-hydroxymethyl benzoin sulfonic esters; and/or
   b) the solvent is 1,3-butanediol, di(propylene glycol) propyl ether, N,N-dimethylacetamide, di(propylene glycol) methyl ether acetate, water, dioxane, dimethylsulfoxide, dimethylformamide, acetone, ethanol, N-methylpyrrolidone, tetrahydrofuran, ethyl acetate, acetonitrile, toluene, xylenes, hexane, N-methylacetamide, propanol, or methanol.

9. The method of any one of claims 5-8, wherein

a) the monomer or the cross-linking agent or both are present in the solvent in 10% to 45%) (w/w); or

b) the monomer or the cross-linking agent or both are present in the solvent in an amount of 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, or 40% (w/w).

10. The method of any one of claims 5-9, wherein any one or more of the following applies,

a) the molar ratio of cross-linking agent to monomer is 10%, 11%, 12%, 13%, 14%, 15%, 16%, 17%, 18%, 19%, 20%, 21%, 22%, 23%, 24%, or 25%;

b) the covered support member is irradiated at 350 nm;

c) the period of time is 1 minute, 5 minutes, 10 minutes, 15 minutes, 20 minutes, 30 minutes, 45 minutes, or 1 hour.

**Patentansprüche**

1. Verbundmaterial, umfassend:

ein Trägerelement, das mehrere Poren umfasst, die sich durch das Trägerelement erstrecken; und

ein makroporöses vernetztes Gel, das mehrere Makroporen und mehrere seitenständige hydrophobe Gruppierungen umfasst; wobei sich das makroporöse vernetzte Gel in den Poren des Trägerelements befindet und der durchschnittliche Porendurchmesser der Makroporen kleiner ist als der durchschnittliche Porendurchmesser der Poren, **dadurch gekennzeichnet, dass** das makroporöse vernetzte Gel ein durch die in-situ-Reaktion eines ersten Monomers und eines zweiten Monomers und eines Vernetzungsmittels gebildetes Polymer umfasst und das erste Monomer einen log-P-Wert (Octanol-Wasser) von 1 bis 7 aufweist und das zweite Monomer einen log-P-Wert (Octanol-Wasser) von -1 bis 1 aufweist und dass es sich bei dem ersten Monomer um Ethylacrylat, Methylmethacrylat, Phenylacrylat, n-Butylacrylat, n-Butylmethacrylat, n-Hexylacrylat, 2-Ethylhexylacrylat, n-Octylacrylat, n-Decylacrylat, Laurylacrylat oder Laurylmethacrylat handelt und es sich bei dem zweiten Monomer um Acrylamid, N-Vinyl-2-Pyrrolidinon, 2-Hydroxyethylmethacrylat, Methylacrylat oder Glycidylmethacrylat handelt und dass es sich bei dem Vernetzungsmittel um Trimethylolpropantrimethacrylat handelt.

2. Verbundmaterial nach Anspruch 1, wobei eine oder mehrere der folgenden Aussagen zutreffen:

a) bei den seitenständigen hydrophoben Gruppierungen handelt es sich um Ethyl-, Butyl-, Hexyl-, 2-Ethylhexyl-, Dodecanoyl-, Stearyl-, Hydroxypropyl-, Phenyl-, Ether- oder Poly-(propylenglykol)gruppen;

b) das Molverhältnis von erstem Monomer zu zweitem Monomer beträgt 0,01:1 bis 1:1;

c) das Molverhältnis von erstem Monomer zu zweitem Monomer beträgt 0,05:1 bis 0,5:1;

d) das Molverhältnis von erstem Monomer zu zweitem Monomer beträgt 0,1:1, 0,15:1 oder 0,20:1;

e) das makroporöse vernetzte Gel hat eine Volumenporosität von 30 % bis 80 % und die Makroporen haben einen durchschnittliche Porendurchmesser von 10 nm bis 3000 nm, wobei gegebenenfalls eine oder mehrere der folgenden Aussagen zutreffen:

i) der durchschnittliche Porendurchmesser der Makroporen beträgt 25 nm bis 1500 nm;

ii) der durchschnittliche Porendurchmesser der Makroporen beträgt 50 nm bis 1000 nm; und

iii) der durchschnittliche Porendurchmesser der Makroporen beträgt 300 nm bis 400 nm; und

f) bei dem Verbundmaterial handelt es sich um eine Membran.

3. Verbundmaterial nach Anspruch 1 oder 2, wobei das Trägerelement ein Hohlraumvolumen aufweist und das Hohlraumvolumen des Trägerelements weitgehend mit dem makroporösen vernetzten Gel gefüllt ist.

4. Verbundmaterial nach einem der Ansprüche 1-3, wobei eine der folgenden Aussagen zutrifft:

a) das Trägerelement umfasst ein Polymer; das Trägerelement ist 10 μm bis 500 μm dick; die Poren des Trägerelements haben einen durchschnittlichen Porendurchmesser von 0,1 μm bis 25 μm; und das Trägerelement hat eine Volumenporosität von 40 % bis 90 %;

b) das Trägerelement umfasst ein Polyolefin;

c) das Trägerelement umfasst ein Polymermaterial aus der Gruppe bestehend aus Polysulfonen, Polyethersulfonen, Polyphenylenoxiden, Polycarbonaten, Polyestern, Cellulose und Cellulosederivaten; und

d) das Trägerelement umfasst einen faserförmigen Web- oder Vliesstoff, der ein Polymer umfasst; das Trägerelement ist 10 μm bis 2000 μm dick; die Poren des Trägerelements haben einen durchschnittlichen Porendurchmesser von 0,1 μm bis 25 μm; und das Trägerelement hat eine Volumenporosität von 40 % bis 90 %.

5. Verfahren zur Herstellung des Verbundmaterials nach Anspruch 1, das folgende Schritte umfasst:

Vereinigen des ersten Monomers, des zweiten Monomers, eines Photoinitiators, des Vernetzungsmittels und eines Lösungsmittels, wodurch eine Monomermischung gebildet wird; Inberührungbringen eines Trägerelements mit der Monomermischung, wodurch ein modifiziertes Trägerelement gebildet wird; wobei das Trägerelement mehrere Poren umfasst, die sich durch das Trägerelement erstrecken, und der durchschnittliche Porendurchmesser der Poren 0,1 bis 25 μm beträgt; Bedecken des modifizierten Trägerelements mit einer Polymerfolie, wodurch ein bedecktes Element gebildet wird; und Bestrahlen des bedeckten Trägerelements über einen Zeitraum, wodurch ein Verbundmaterial gebildet wird.

6. Verfahren nach Anspruch 5, wobei das Verfahren ferner den Schritt des Waschens des Verbundmaterials mit einem zweiten Lösungsmittel umfasst.

7. Verfahren nach Anspruch 5 oder 6, wobei

a) der Photoinitiator in der Monomermischung in einer Menge von 0,4 % (w/w) bis 2,5 % (w/w), bezogen auf das Gesamtgewicht an Monomer, vorliegt oder
b) der Photoinitiator in der Monomermischung in einer Menge von 0,6 %, 0,8 %, 1,0 %, 1,2 % oder 1,4 % (w/w), bezogen auf das Gesamtgewicht an Monomer, vorliegt.

8. Verfahren nach einem der Ansprüche 5-7, wobei

a) der Photoinitiator aus der Gruppe bestehend aus 1-[4-(2-Hydroxyethoxy)phenyl]-2-hydroxy-2-methyl-1-propan-1-on, 2,2-Dimethoxy-2-phenylacetophenon, Benzophenon, Benzoin und Benzoinethern, Dialkoxyacetophenonen, Hydroxyalkylphenonen und α-Hydroxymethylbenzoinsulfonsäureestern ausgewählt ist; und/oder
b) es sich bei dem Lösungsmittel um 1,3-Butandiol, Di(propylenglykol)propylether, N,N-Dimethylacetamid, Di(propylenglykol)methyletheracetat, Wasser, Dioxan, Dimethylsulfoxid, Dimethylformamid, Aceton, Ethanol, N-Methylpyrrolidon, Tetrahydrofuran, Essigsäureethylester, Acetonitril, Toluol, Xylole, Hexan, N-Methylacetamid, Propanol oder Methanol handelt.

9. Verfahren nach einem der Ansprüche 5-8, wobei

a) das Monomer oder das Vernetzungsmittel oder beide in dem Lösungsmittel in einer Menge von 10 % bis 45 % (w/w) vorliegen; oder
b) das Monomer oder das Vernetzungsmittel oder beide in dem Lösungsmittel in einer Menge von 15 %, 16 %, 17 %, 18 %, 19 %, 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 % oder 40 % (w/w) vorliegen.

10. Verfahren nach einem der Ansprüche 5-9, wobei ein oder mehrere der folgenden Aussagen zutreffen:

a) das Molverhältnis von Vernetzungsmittel zu Monomer beträgt 10 %, 11 %, 12 %, 13 %, 14 %, 15 %, 16 %, 17 %, 18 %, 19 %, 20 %, 21 %, 22 %, 23 %, 24 % oder 25 %;
b) das bedeckte Trägerelement wird bei 350 nm bestrahlt;
c) der Zeitraum beträgt 1 Minute, 5 Minuten, 10 Minuten, 15 Minuten, 20 Minuten, 30 Minuten, 45 Minuten oder 1 Stunde.

**Revendications**

1. Matériau composite, comprenant :

un élément de support, comprenant une pluralité de pores s'étendant à travers l'élément de support ; et
un gel réticulé macroporeux, comprenant une pluralité de macropores, et une pluralité de fragments hydrophobes pendants ;
dans lequel le gel réticulé macroporeux est situé dans les pores de l'élément de support ; et le diamètre de pore moyen des macropores est inférieur au diamètre de pore moyen des pores, **caractérisé en ce que** le gel réticulé macroporeux comprend un polymère formé par l'intermédiaire de la réaction *in situ* d'un premier monomère et d'un deuxième monomère et d'un agent de réticulation ; et le premier monomère a une valeur log P (octanol-eau) de 1 à 7 ; et le deuxième monomère a une valeur log P (octanol-eau) de -1 à 1 ; et **en ce que** le premier monomère est l'acrylate d'éthyle, le méthacrylate de méthyle, l'acrylate de phényle, l'acrylate de n-butyle, le méthacrylate de n-butyle, l'acrylate de n-hexyle, l'acrylate de 2-éthylhexyle, l'acrylate de n-octyle, l'acrylate de n-décyle, l'acrylate de lauryle ou le méthacrylate de lauryle ; et le deuxième monomère est l'acrylamide, la N-vinyl-2-pyrrolidinone, le méthacrylate de 2-hydroxyéthyle, l'acrylate de méthyle ou le méthacrylate de glycidyle ; et **en ce que** l'agent de réticulation est le triméthacrylate de triméthylolpropane.

2. Matériau composite selon la revendication 1, où l'un quelconque des points suivants s'applique,

   a) les fragments hydrophobes pendants sont des groupes éthyle, butyle, hexyle, 2-éthylhexyle, dodécyle, stéaryle, hydroxypropyle, phényle, éther ou polypropylène glycol ;
   b) le rapport molaire du premier monomère au deuxième monomère est de 0,01:1 à 1:1 ;
   c) le rapport molaire du premier monomère au deuxième monomère est de 0,05:1 à 5:1 ;
   d) le rapport molaire du premier monomère au deuxième monomère est 0,1:1, 0,15:1 ou 0,20:1 ;
   e) le gel réticulé macroporeux a une porosité en volume de 30 % à 80 % ; et les macropores ont un diamètre de pore moyen de 10 nm à 3000 nm, dans lequel, facultativement, l'un quelconque des points suivants s'applique,

      i) le diamètre de pore moyen des macropores est de 25 nm à 1500 nm ;
      ii) le diamètre de pore moyen des macropores est de 50 nm à 1000 nm ; et
      iii) le diamètre de pore moyen des macropores est de 300 nm à 400 nm ; et

   f) le matériau composite est une membrane.

3. Matériau composite selon les revendications 1 ou 2, dans lequel l'élément de support a un volume de vide ; et le volume de vide de l'élément de support est sensiblement rempli avec le gel réticulé macroporeux.

4. Matériau composite selon l'une quelconque des revendications 1 à 3, où l'un quelconque des points suivants s'applique,

   a) l'élément de support comprend un polymère ; l'élément de support a une épaisseur de 10 $\mu$m à 500 $\mu$m ; les pores de l'élément de support ont un diamètre de pore moyen de 0, 1 $\mu$m à 25 $\mu$m ; et l'élément de support a une porosité en volume de 40 % à 90 % ;
   b) l'élément de support comprend une polyoléfine ;
   c) l'élément de support comprend un matériau polymère choisi dans le groupe constitué de polysulfones, polyéthersulfones, poly(oxydes de phénylène), polycarbonates, polyesters, cellulose et dérivés de cellulose ; et
   d) l'élément de support comprend un tissu fibreux ou un tissu non fibreux comprenant un polymère ; l'élément de support est de 10 $\mu$m à 2000 $\mu$m d'épaisseur ; les pores de l'élément de support ont un diamètre de pore moyen de 0,1 $\mu$m à 25 $\mu$m ; et l'élément de support a une porosité en volume de 40 % à 90 %.

5. Procédé de fabrication du matériau composite selon la revendication 1, comprenant les étapes de :

   combinaison du premier monomère, du deuxième monomère, d'un photoamorceur, de l'agent de réticulation, et d'un solvant, de façon à former un mélange de monomères ;
   mise en contact d'un élément de support avec le mélange de monomères, de façon à former un élément de support modifié ; dans lequel l'élément de support comprend une pluralité de pores s'étendant à travers l'élément de support, et le diamètre de pore moyen des pores est de 0,1 à 25 $\mu$m ;
   recouvrement de l'élément de support modifié avec une feuille polymère, de façon à former un élément de support recouvert ; et
   irradiation de l'élément de support recouvert pendant une période, de façon à former un matériau composite.

6. Procédé selon la revendication 5, le procédé comprenant en outre l'étape de lavage du matériau composite avec un deuxième solvant.

7. Procédé selon l'une quelconque des revendications 5 ou 6, dans lequel

   a) le photoamorceur est présent dans le mélange de monomères en une quantité de 0,4 % (m/m) à 2,5 % (m/m) par rapport au poids total de monomère, ou
   b) le photoamorceur est présent dans le mélange de monomères à 0,6 %, 0,8 %, 1,0 %, 1,2 %, ou 1,4 % (m/m) par rapport au poids total de monomère.

8. Procédé selon l'une quelconque des revendications 5 à 7, dans lequel

   a) le photoamorceur est choisi dans le groupe constitué des 1-[4-(2-hydroxyéthoxy)-phényl]-2-hydroxy-2-méthyl-1-propane-1-one, 2,2-diméthoxy-2-phénylacétophénone, benzophénone, benzoïne et éthers de benzoïne, dialcoxyacétophénones, hydroxyalkylphénones et esters sulfoniques de $\alpha$-hydroxyméthylbenzoïne ; et/ou
   b) le solvant est le 1,3-butanediol, l'éther propylique de di(propylène glycol), le N,N-diméthylacétamide, l'acétate d'éther méthylique de di(propylène glycol), l'eau, le dioxane, le diméthylsulfoxyde, le diméthylformamide, l'acétone, l'éthanol, la N-méthylpyrrolidone, le tétrahydrofurane, l'acétate d'éthyle, l'acétonitrile, le toluène, les xylènes, l'hexane, le N-méthylacétamide, le propanol ou le méthanol.

9. Procédé selon l'une quelconque des revendications 5 à 8, dans lequel

a) le monomère ou l'agent de réticulation ou les deux sont présents dans le solvant à 10 % à 45 % (m/m) ; ou

b) le monomère ou l'agent de réticulation ou les deux sont présents dans le solvant en une quantité de 15 %, 16 %, 17 %, 18 %, 19 %, 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 %, ou 40 % (m/m).

10. Procédé selon l'une quelconque des revendications 5 à 9, dans lequel l'un ou plusieurs quelconques des points suivants s'appliquent,

a) le rapport molaire de l'agent de réticulation au monomère est 10 %, 11 %, 12 %, 13 %, 14 %, 15 %, 16 %, 17 %, 18 %, 19 %, 20 %, 21 %, 22 %, 23 %, 24 %, ou 25 % ;

b) l'élément de support recouvert est irradié à 350 nm ;

c) la durée est de 1 minute, 5 minutes, 10 minutes, 15 minutes, 20 minutes, 30 minutes, 45 minutes ou 1 heure.

**Figure 1**

Figure 2

**Figure 3**

| Protein/mAb | TOSOH BIOSCIENCES | | Butyl Sepharose 4 Fast Flow (GE Health Care) | Sartobind Phenyl membrane (Sartorius) | Natrix | |
|---|---|---|---|---|---|---|
| | Butyl-650M | Phenyl-650M | | | **Butyl** | **Phenyl** |
| Lysozyme | 32.2 | 27.5 | - | 23.0 | **34.0** | **24.0** |
| mAb/IgG | 42.1 | 35.2 | 7.0 | 12.0 | **47.0** | **28.2** |

Figure 4

**Figure 5**

| Membrane | %Ligand (mol/mol$_{gel}$) | Water Flux (kg/m$^2$hr) | Binding buffer | Elution buffer A | Elution buffer B | Binding capacity at 10% Bth | % Yield | | Total Yield at >20% Bth |
|---|---|---|---|---|---|---|---|---|---|
| | | | | | | | A | B | |
| GMA-BuMe-TRIM-M | 7.6 | 3,000 | 50mM NaPB/0.7 M Am. Sulf., pH 7 | 50mM NaPB, pH 7 | - | 23.3 | 65 | - | 65 |
| GMA-BuMe-TRIM-M | 19 | 1,200 | | | | 50.0 | 55 | | 55 |
| GMA-BuMe-TRIM-M | 28.5 | 1,100 | | | | 66.1 | 40 | | 40 |
| GMA-BuMe-EGDMA | 13.8 | 3,600 | | | | 21.6 | 68 | | 68 |
| GMA-BuMe-TRIM-M | 19.0 | 1,200 | | | 10% PrOH | 53.7 | 50 | 34.3 | 84.3 |
| GMA-BuMe-TRIM-M | 19.0 | 1,200 | 50mM NaPB/0.5 M Am. Sulf., pH 7 | | | 49.0 | 50 | 40 | 90.0 |
| GMA-BuMe-TRIM-M | 19.0 | 1,200 | | 50mM NaPB, pH 7.8 | | 44.2 | 50 | 35.6 | 85.6 |
| GMA-BuMe-TRIM-M | 19.0 | 1,200 | 50mM NaPB/1 M NaCl, | 25mM NaPB, pH 7.8 | | 33.3 | 45.8 | 44.7 | 90.5 |

| | | | | | | | | | |
|---|---|---|---|---|---|---|---|---|---|
| | | | | pH 7 | | | | | |
| GMA-BuMe-TRIM-M | 19.0 | 1,200 | 50mM NaPB/0.8 M Am.Sulf., pH 7 | 50 mM NaPB, 5% PrOH, pH 7 | - | 58.1 | 95.5 | - | 95.5 |
| GMA-BuMe-TRIM-M | 28.5 | 1,100 | | | | 64.8 | 73.6 | | 73.6 |
| GMA-EGPhA-TRIM-M | 19.1 | 2,200 | | | | 31.2 | 99.8 | | 99.8 |
| GMA-LMA-TRIM-M | 4.5 | 1,200 | | | | 54.5 | 85.0 | | 85.0 |
| GMA-EGPhA-TRIM-M | 19.1 | 2,200 | | 50 mM NaPB, 1% PrOH, pH 7 | | 32.0 | 52.0 | | 52.0 |
| GMA-LMA-TRIM-M | 4.5 | 1,200 | | | | 51.9 | 45.5 | | 45.5 |

Figure 5 cont'd

**EP 2 499 192 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Hydrophobic Interaction Chromatography: Principles and Methods,* 2000

- **J. HAPPEL ; H. BRENNER.** Low Reynolds Number Hydrodynamics. Noordhof Int. Publ, 1973, 393